# EUROPÄISCHE PATENTSCHRIFT

(11) **EP 1 529 707 B1**
(45) Veröffentlichungstag und Bekanntmachung des Hinweises auf die Patenterteilung: **08.08.2007**
(21) Anmeldenummer: 04090406.2
(22) Anmeldetag: 22.10.2004
(51) Int. Cl.: B60T 17/22, B61L 15/00

(54) **Eigensichere Störschalteinheit für Fahrzeuge, insbesondere für Schienenfahrzeuge**
Fail-safe switching unit for resetting a failure condition for vehicles, especially for railway vehicles
Unité de commutation à sécurité intrinsèque en cas de défaillance pour véhicules, en particulier pour véhicules ferroviaires

(30) Priorität: 07.11.2003 DE 10353405
(43) Veröffentlichungstag der Anmeldung: 11.05.2005
(73) Patentinhaber: SIEMENS AKTIENGESELLSCHAFT, 80333 München (DE)
(72) Erfinder: Pösel, Bernhard, 38154 Königslutter (DE); Scheunemann, Reinhard, 38162 Cremlingen (DE)

(56) Entgegenhaltungen:
- EP-A- 0 844 157
- EP-A- 1 118 520
- DE-C- 529 718
- DE-U1- 9 411 793

## Beschreibung

Die Erfindung betrifft eine sichere Störschalteinheit für Fahrzeuge, insbesondere für Schienenfahrzeuge, gemäß dem Oberbegriff des Anspruchs 1.

Es ist bekannt, bei Schienenfahrzeugen Zugsicherungseinrichtungen vorzusehen, die nach dem Fail-Safe-Prinzip aufgebaut sind. Die Zugsicherungseinrichtungen lösen bei Störfällen systembedingt über eine Zwangsbremsausgabe eine Zwangsbremse aus. Zur Deaktivierung (Unwirksamschalten) einer ausgefallenen Zugsicherungseinrichtung ist ein Störschalter vorgesehen; beim Unwirksamschalten wird die Zwangsbremsausgabe überbrückt.

Eine Störschalteinheit nach dem Oberbegriff von Anspruch 1 ist aus der DE 529 718 C bekannt.

Ein Zwangsbremseingriff stellt eine der wesentlichen sicherheitsgerichteten Funktionen der Zugsicherung dar. Aus diesen Gründen ist es notwendig, dass das Unwirksamschalten mittels Störschalter einen ähnlich hohen Sicherheitsstandard (CENELEC SIL4) wie die Zwangsbremsausgabe aufweist. Wird dies außeracht gelassen, ist die Störschalterlösung sicherungstechnisch mangelhaft.

Aus diesem Grunde wurden Störschalter auf der Basis von Schaltrelais entwickelt, die mittels Software zurücklesbar sind und bei Fehlern prozesshemmend wirken.

Der Nachteil dieser Softwarelösung ist ein hoher Test- und Validierungsaufwand.

Die Aufgabe der Erfindung ist es, eine Störschalteinheit für Fahrzeuge anzugeben, die einen hohen Sicherheitsstandard - ähnlich der Zwangsbremsausgabe - aufweist.

Die Lösung dieser Aufgabe ist durch die im Anspruch 1 angegebenen Merkmale gegeben. Die kennzeichnenden Merkmale der Unteransprüche gehören zu vorteilhaften Ausgestaltungen.

Die Lösung sieht vor, dass zwei voneinander unabhängige Schaltrelais vorgesehen sind, die jeweils zwei Kontakte als zwangsgeführte Kontaktpaare aufweisen, wobei jeweils ein Kontakt eines Paars geöffnet und der andere aufgrund der Zwangsführung geschlossen ist, dass die bei nichterregtem Relais geschlossenen Kontakte der Kontaktpaare als Ausfalloffenbarungskontakte in Reihe mit den Kontakten der Kontaktkette geschaltet sind, wobei die beiden anderen bei nichterregtem Relais geöffneten Kontakte der Kontaktpaare ebenfalls in Reihe geschaltet sind und als Überbrückungskontakte die Kontaktkette überbrücken, wobei die Ausfalloffenbarungskontakte den Ausfall eines Relais dadurch anzeigen, dass ein Lösen der Zwangsbremse verhindert wird, und dass die beiden voneinander unabhängigen Störschalterkontakte des Störschalters jeweils eines der beiden Schaltrelais betätigen. Die zwangsgeführten Kontaktpaare stellen sicher, dass wenn ein Kontakt nicht ordnungsgemäß öffnet, weil beispielsweise das Schaltrelais "kleben geblieben" ist, zumindest der Ausfalloffenbarungskontakt offen bleibt. D.h. aber, die Zwangsbremse wird oder bleibt aktiviert, was den Ausfall eines der Schaltrelais offenbart. Da es sich hierbei um eine reine Hardwarelösung handelt, erübrigt sich eine Softwareerstellung einschließlich der vorgeschriebenen Tests, Validierung und Zulassung.

Aus sicherungstechnischen Gründen sind die Störschalterkontakte vorteilhafterweise zur Betätigung der beiden Schaltrelais geschlossen, die sich dann aufgrund des Stromflusses im erregten Zustand befinden.

Bei einer vorteilhaften Ausführung werden zwei Kontakte der Kontaktkette unabhängig voneinander über eine sichere Ausgabe betätigt.

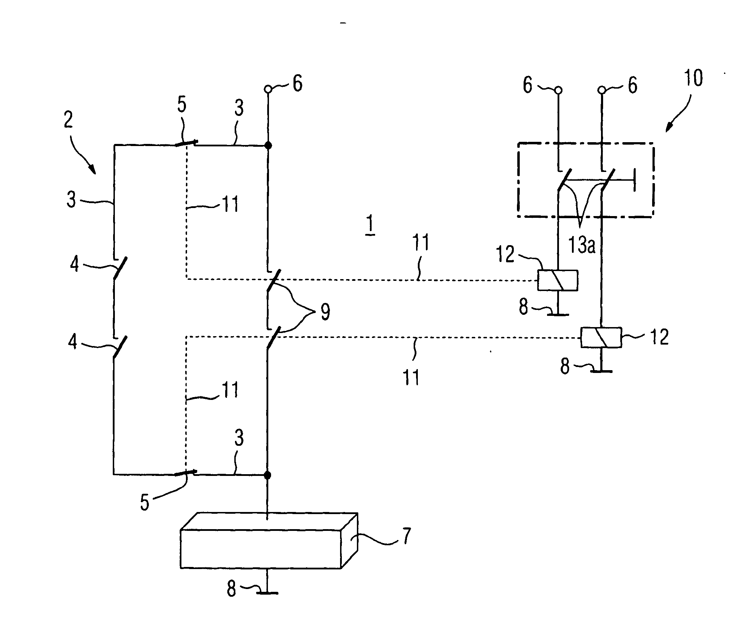

Die Erfindung wird nachfolgend anhand einer einzigen Figur näher beschrieben. Die Figur zeigt eine sichere Störschalteinheit 1 eines Schienenfahrzeugs mit einer Ausfalloffenbarung.

Zur Störschalteinheit 1 gehört eine Sicherungseinrichtung 2 mit einer Kontaktkette 3, welche aus in Reihe geschalteten elektrischen Kontakten 4, 5 gebildet wird. Die Kontakte 4, 5 gehören jeweils zu einem Schaltelement bzw. einem Schalter. Die Kontaktkette 3 ist an einem Ende mit einer Stromversorgung (Bordnetz) 6 des Fahrzeugs verbunden. Das andere Ende ist an einer Zwangsbremse 7 angeschlossen, die wiederum mit Masse 8 verbunden ist. In der Figur sind die Kontakte 5 geschlossen und die beiden über eine nicht gezeigte sichere Ausgabe (z.B. durch einen sicheren Rechner) schaltbaren Kontakte 4 geöffnet.

Bei der Kontaktkette 3 handelt es sich um eine schematische Darstellung einer "sicheren Zwangsbremsausgabe". Durch die beiden geöffneten Kontakte 4 ist die Zwangsbremse 7 aktiviert, was beispielsweise bei einem Störfall bewirkt durch die sichere Ausgabe der Fall ist. Werden die beiden Kontakte 4 nach Beseitigen der Störungen geschlossen, wird die Zwangsbremse 7 wieder gelöst.

Wie die Figur weiter zeigt, sind parallel zur Kontaktkette 3 zwei Kontakte 9 in Reihe geschaltet. Diese sind in der Figur geöffnet dargestellt und mittels eines Störschalters 10 durch eine Bedienperson schließbar. Werden die beiden Kontakte 9 bei geöffneten Kontakten 4 geschlossen, so wird die Kontaktkette 3 überbrückt und die Sicherungseinrichtung 2 ist unwirksam geschaltet. Die Kontakte 9 kann man deshalb auch als Überbrückungskontakte 9 bezeichnen. Die Zwangsbremse 7 kann bei geschlossenen Überbrückungskontakten 9 durch die Kontakte 4 nicht mehr aktiviert werden.

Die unterbrochene Linie 11 verbindet in der Figur jeweils mechanisch einen Kontakt 5 und einen Überbrückungskontakt 9, die je ein zwangsgeführtes Kontaktpaar bilden. Dies bedeutet, dass jeweils ein Kontakt 5 oder 9 eines Kontaktpaars geöffnet und der andere Kontakt 9 bzw. 5 des Paars geschlossen ist. Die beiden Kontakte eines Kontaktpaars sind also niemals gleichzeitig geschlossen.

Jedes zwangsgeführte Kontaktpaar 5, 9 gehört zu einem Schaltrelais 12. Wie die Figur erkennen lässt, sind die beiden Schaltrelais 12 über die beiden unabhängigen Störschalterkontakte 13a des Störschalters mit dem Bordnetz 6 verbindbar. Dadurch fließt ein Strom durch die beiden Schaltrelais 12 (die Schaltrelais 12 befinden sich im erregten Zustand) und die Überbrückungskontakte 9 werden geschlossen.

Aufgrund der Zwangsführung werden die Kontakte 5 entsprechend geöffnet. Die Kontakte 5 sind so geschaltet, dass sie einen Ausfall eines der Schaltrelais 12 offenbaren, weshalb sie hier als Ausfalloffenbarungskontakte 5 bezeichnet werden.

Ein Ausfall kann beispielsweise durch ein "Klebenbleiben" eines der Überbrückungskontakte 9 verursacht sein. In diesem Fall ist der zugehörige zwangsgeführte Ausfalloffenbarungskontakt 5 geöffnet und damit die Zwangsbremse 7 aktiviert, unabhängig davon, ob die Kontakte 4 geöffnet oder geschlossen sind.

Auf diese Weise wird eine "eigensichere" Störschalteinheit 1 (Störschaltermechanismus) realisiert, die zweikanalig aufgebaut und einzelfehlersicher ist.

## Patentansprüche

1. Sichere Störschalteinheit (1) für Fahrzeuge, insbesondere für Schienenfahrzeuge,
mit einer zumindest eine Zwangsbremse (7) schaltenden Sicherungseinrichtung (2), die eine Kontaktkette (3) von in Reihe geschalteten elektrischen Kontakten (4, 5) aufweist,
wobei die Zwangsbremse (7) bei wirksamer Sicherungseinrichtung (2) durch Öffnen von zumindest einem Kontakt (4, 5) der Kontaktkette (3) aktivierbar ist, und
mit einem zwei Störschalterkontakte (13a) aufweisenden Störschalter (10) zum Unwirksamschalten der Sicherungseinrichtung (2),
**dadurch gekennzeichnet,**
**dass** zwei voneinander unabhängige Schaltrelais (12) vorgesehen sind, die jeweils zwei Kontakte (5, 9) als zwangsgeführte Kontaktpaare aufweisen, wobei jeweils ein Kontakt (5 oder 9) eines Paars geöffnet und der andere (9 bzw. 5) aufgrund der Zwangsführung geschlossen ist,
**dass** die bei nichterregtem Relais (12) geschlossenen Kontakte (5) der Kontaktpaare als Ausfalloffenbarungskontakte in Reihe mit den Kontakten (4) der Kontaktkette (3) geschaltet sind, wobei die beiden anderen bei nichterregtem Relais (12) geöffneten Kontakte (9) der Kontaktpaare ebenfalls in Reihe geschaltet sind und als Überbrückungskontakte die Kontaktkette (3) überbrücken, wobei die Ausfalloffenbarungskontakte den Ausfall eines Relais (12) dadurch anzeigen, dass die Zwangsbremse (7) ausgelöst wird, und
**dass** die beiden voneinander unabhängigen Störschalterkontakte (13a) des Störschalters (10) jeweils eines der beiden Schaltrelais (12) betätigen.

2. Sichere Störschalteinheit (1) nach Anspruch 1,
**dadurch gekennzeichnet,**
**dass** die Störschalterkontakte (13a) zur Betätigung der beiden Schaltrelais (12) geschlossen sind, so dass sich die Schaltrelais (12) im erregten Zustand befinden.

3. Sichere Störschalteinheit (1) nach Anspruch 1 oder 2,
**dadurch gekennzeichnet,**
**dass** zwei der Kontakte (4, 5) der Kontaktkette (3) von einer sicheren Ausgabe betätigt werden.

## Claims

1. Reliable switching unit (1) for resetting a failure condition for vehicles, in particular for rail vehicles,
having a protection device (2) which switches at least one automatic brake (7) which has a contact chain (3) of electrical contacts (4, 5) which are connected in series, wherein the automatic brake (7) can be activated by opening at least one contact (4, 5) of the contact chain (3) when the protection device (2) is effective, and
having a failure-condition-resetting switch (10) which has two failure-condition-resetting switch contacts (13a) and has the purpose of deactivating the protection device (2), **characterized in that** two switching relays (12) which are independent of one another are provided, said switching relays (12) each having two contacts (5, 9) as positively guided contact pairs, wherein in each case one contact (5 or 9) of a pair is opened and the other (9 or 5) is closed owing to the positive guidance,
**in that** the contacts (5) of the contact pairs which are closed when the relays (12) are not excited are connected as failure-indicating contacts in series with the contacts (4) of the contact chain (3), wherein the two other contacts (9) of the contact pairs which are opened when the relays (12) are not excited are likewise connected in series and bypass the contact chain (3) as bypass contacts, wherein the failure-indicating contacts indicate the failure of a relay (12) by virtue of the fact that the automatic brake (7) is triggered, and **in that** the two failure-condition-resetting switch contacts (13a) of the failure-condition-resetting switch (10) which are independent of one another each activate one of the two switching relays (12).

2. Reliable switching unit (1) for resetting a failure condition according to Claim 1, **characterized in that** the failure-condition-resetting switch contacts (13a) are closed in order to activate the two switching relays (12) so that the switching relays (12) are in the excited state.

3. Reliable switching unit (1) for resetting a failure condition according to Claim 1 or 2, **characterized in that** two of the contacts (4, 5) of the contact chain (3) are activated by a reliable output means.

## Revendications

1. Unité (1) de commutation à sécurité en cas de défaillance, pour des véhicules, notamment pour des véhicules ferroviaires,
comprenant un dispositif (2) de sécurité manoeuvrant au moins un frein (7) d'arrêt automatique et ayant une chaîne (3) de contacts (4, 5) électriques montés en série,
le frein (7) d'arrêt automatique pouvant être activé lorsque le dispositif (2) de sécurité est efficace par une ouverture d'au moins d'un contact (4,5) ,de la chaîne (3) de contacts, et
comprenant un interrupteur (10) de défaillance ayant deux contact (13a) de défaillance pour rendre inefficace le dispositif (2) de sécurité,
**caractérisé**
**en ce qu'**il est prévu deux relais (12) de commutation, qui sont indépendants l'un de l'autre et qui ont respectivement deux contacts (5,9) en tant que paire de contacts à guidage forcé, respectivement un contact (5 ou 9) d'une paire étant ouverte et l'autre (9 ou 5)étant fermé en raison du guidage forcé,
**en ce que** les contacts (5) de la paire de contact, qui sont fermés lorsque le relais (12) n'est pas excité, sont montés en contacts révélant une défaillance en série avec les contacts (4) de la chaîne (3) de contacts, les deux autres contacts (9) des paires de contact, qui sont ouverts lorsque le relais (12) n'est pas excité, sont montés également en série et shuntent en tant que contacts de shunt la chaîne (3) de contacts, les contacts révélant une défaillance indiquant la défaillance d'un relais en déclenchant le frein (7) d'arrêt automatique, et
**en ce que** les deux contacts (13a) de l'interrupteur (10) de défaillance, qui sont indépendants l'un de l'autre, actionnent respectivement l'un des deux relais (12) de commutation.

2. Unité (1) de commutation à sécurité en cas de défaillance suivant la revendication 1,
**caractérisée**
**en ce que** les contacts (13a) de l'interrupteur de défaillance sont fermés pour actionner les deux relais (12) de commutation de sorte que les relais (12) de commutation se trouvent à l'état excité.

3. Unité (1) de commutation à sécurité en cas de défaillance suivant la revendication 1 ou 2,
**caractérisée en ce que** les contacts (4,5) de la chaîne (3) de contacts sont actionnés par une sortie sure.
